# FASCICULE DE BREVET EUROPEEN

(11) **EP 2 593 267 B1**
(45) Date de publication et mention de la délivrance du brevet: **16.09.2015**
(21) Numéro de dépôt: 11723566.3
(22) Date de dépôt: 05.05.2011
(51) Int. Cl.: B23K 26/14, B23K 26/32, B23K 28/02, B23K 35/02, B23K 35/30, B23K 26/20, B23K 35/38

(54) **PROCEDE DE SOUDAGE HYBRIDE ARC/LASER DE PIECES EN ACIER ALUMINISE AVEC GAZ COMPRENANT DE L'AZOTE ET/OU DE L'OXYGENE**
HYBRIDES LICHTBOGENSCHWEISS-/LASERSCHWEISSVERFAHREN FÜR ALUMINIUMBESCHICHTETES STAHLTEIL UNTER VERWENDUNG VON GAS MIT STICKSTOFF UND/ODER SAUERSTOFF
HYBRID ARC/LASER-WELDING METHOD FOR ALUMINIZED STEEL PART USING A GAS INCLUDING NITROGEN AND/OR OXYGEN

(30) Priorité: 13.07.2010 FR 1055691
(43) Date de publication de la demande: 22.05.2013
(73) Titulaire: L'AIR LIQUIDE, Société Anonyme pour l'Etude et l'Exploitation des Procédés Georges Claude, 75007 Paris (FR)
(72) Inventeur: BRIAND, Francis, F-75009 Paris (FR); DUBET, Olivier, F-78210 Saint Cyr L'ecole (FR)
(74) Mandataire: Pittis, Olivier
(86) Numéro de dépôt international: PCT/FR2011/051015
(87) Numéro de publication internationale: WO 2012/007663

(56) Documents cités:
- EP-A1- 1 878 531
- EP-A2- 1 380 380
- DD-A1- 133 538
- DE-A1- 19 831 831
- JP-A- 2003 019 564
- JP-A- 2003 220 481
- US-A- 4 196 336

## Description

L'invention porte sur un procédé de soudage de soudage hybride laser/arc de pièces en acier comprenant un revêtement surfacique à base d'aluminium, en particulier un revêtement d'aluminium et de silicium, mettant en oeuvre un gaz de protection formé d'argon et/ou d'hélium additionné de faibles proportions d'azote ou d'oxygène.

Certains aciers dit aluminisés car revêtus d'aluminium ou d'un alliage à base d'aluminium, tel les aciers de type USIBOR^{™}, présentent des caractéristiques mécaniques très élevées après emboutissage à chaud et sont, de ce fait, de plus en plus utilisés dans le domaine de la construction de véhicules automobiles, lorsqu'un gain de poids est recherché.

En effet, ces aciers sont conçus pour être traités thermiquement puis trempés pendant l'opération d'emboutissage à chaud et les caractéristiques mécaniques qui en découlent permettent un allégement très significatif du poids du véhicule par rapport à un acier à haute limite d'élasticité standard. Ils sont principalement utilisés pour fabriquer des poutres de pare-chocs, des renforts de porte, des pieds milieu, des montants de baie...

Le document EP-A-1878531, base du préambule de la revendication 1, propose de souder ce type d'aciers aluminisés par mise en oeuvre d'un procédé de soudage hybride laser/arc. Le principe du soudage hybride laser/arc est bien connu dans l'état de la technique.

Toutefois, il a été observé en pratique qu'après une opération de soudage hybride avec atmosphère protectrice formée d'un mélange He/Ar, de pièces en acier revêtues d'aluminium ou d'un alliage d'aluminium, notamment alliage de type Al/Si, et traitement thermique post-soudage comprenant un emboutissage à chaud à 920°C puis une trempe dans l'outil (30°/s), une phase moins résistante en traction que le métal de base et que la zone fondue apparaissait souvent dans l'assemblage soudé.

Or, cette phase moins résistante en traction constitue une zone fragile de la soudure ainsi obtenue, comme expliqué ci-après. Ces zones plus fragiles apparaissent au sein de la zone de martensite sous forme d'îlots de phase blanche contenant des agrégats d'aluminium provenant de la couche surfacique.

Après analyse, il a été déterminé que cette phase contient un pourcentage non négligeable d'aluminium (> 2%) qui provoque la non-transformation austénitique de l'acier lors de son traitement thermique avant emboutissage, c'est-à-dire que cette phase reste sous forme de ferrite Delta et il en résulte une dureté moindre que le reste de la pièce ayant subit une transformation martensitique/bainitique.

Or, la phase non transformée en phase martensite peut entraîner, lors d'une caractérisation mécanique de l'assemblage après soudage, emboutissage suivi d'un traitement thermique, des fissures, voire une rupture par cisaillement de l'assemblage soudé, car ces zones ayant incorporé de l'aluminium, présentent une résistance de la soudure plus faible que celle du métal déposé.

Le problème qui se pose est dès lors de proposer un procédé de soudage hybride arc/laser améliorant les propriétés mécaniques du joint soudé, lors d'une opération de soudage de pièces d'acier revêtues d'une couche comprenant de l'aluminium. Plus précisément, le problème est de pouvoir obtenir une microstructure homogène de type martensite en zone fondue, c'est-à-dire dans le joint de soudure, après emboutissage à chaud, typiquement à environ 920°C, et trempe dans l'outil d'emboutissage, typiquement avec une vitesse de refroidissement entre 800 et 500°C de l'ordre de 30°C/sec.

La solution de l'invention est un procédé de soudage hybride laser/arc mettant en oeuvre un arc électrique et un faisceau laser se combinant l'un à l'autre, notamment au sein d'un bain de soudage unique, dans lequel du métal fondu est apporté par fusion d'un fil fusible et le bain de soudage est réalisé sur au moins une pièce d'acier comprenant un revêtement surfacique à base d'aluminium, et dans lequel on met en oeuvre par ailleurs un gaz de protection, où le gaz de protection est constitué d'au moins composé principal choisi parmi l'argon et d'hélium, et de 1 à 20% en volume d'au moins un composé additionnel choisi parmi l'azote et l'oxygène.

Selon l'invention, le bain de soudure, et donc subséquemment le joint de soudage, est donc obtenu, au niveau du plan de joint formé par la mise en contact, notamment bout à bout, des pièces à souder, par fusion de l'acier constitutif des pièces sous l'action simultanée d'un faisceau laser et d'un arc électrique qui se combinent l'un à l'autre pour aller fondre le métal de la ou des pièces à souder, alors qu'un apport supplémentaire de métal fondu est obtenu par ailleurs grâce à un fil fusible qui est aussi fondu, de préférence par l'arc électrique, le métal fondu ainsi obtenu étant déposé dans le bain de soudure formé sur la ou les pièces à assembler.

Afin de résoudre le problème susmentionné, selon l'invention, on utilise en tant qu'atmosphère de protection de la zone de soudage, en particulier du bain de soudure, un mélange gazeux qui est formé uniquement, d'une part, d'argon, d'hélium ou les deux en tant que composé(s) principal(-aux) du mélange gazeux et, d'autre part, d'azote ou d'oxygène, voire des deux, en tant que composé(s) additionnel(s), de manière à constituer un mélange gazeux binaire de type Ar/N₂, Ar/O₂, He/O₂ ou He/N₂, ou un mélange gazeux ternaire de type Ar/He/N₂ ou Ar/He/O₂, voire un mélange gazeux quaternaire de type Ar/He/O₂/N₂. Dans tous les cas, la proportion de composé principal (i.e. Ar ou He) ou la somme des proportions des composés principaux (i.e. Ar et He) est supérieure à la proportion de composé additionnel (i.e. N₂ ou O₂) ou la somme des proportions des composés additionnels (i.e. N₂ et O₂) présents dans le mélange gazeux.

Parmi ces différents mélanges gazeux utilisables, deux mélanges gazeux sont particulièrement préférés car conduisant à de très bons résultats, comme expliqué ci-après, à savoir les mélanges Ar/N2 ou Ar/He/N₂ contenant au plus 10% d'azote (% en volume) et avantageusement de 3 à 7% environ d'azote. D'une manière générale, il est à noter que, dans le cadre de la présente invention, sauf indication autre, tous les pourcentages (%) donnés sont des pourcentages en volume (% en volume).

En effet, la mise en oeuvre d'un procédé de soudage hybride arc/laser en utilisant un mélange gazeux de protection formé d'argon et/ou d'hélium, d'une part, et d'azote et/ou d'oxygène, d'autre part, permet d'obtenir, lors de l'assemblage de pièces d'acier aluminisé, un joint de soudure de microstructure martensitique dépourvue ou quasi-dépourvue d'îlots blanchâtres de ferrite, car l'addition d'O₂ ou de N₂ permet de piéger l'aluminium provenant de la couche surfacique et qui est libéré lors de la fusion de ladite couche sous l'effet de l'arc et du faisceau laser.

Le piégeage de l'aluminium par les composés O₂ ou N₂ conduit à la formation de composés de type Al₂O₃ ou AlN en évitant ainsi la formation de ferrite ou d'autres composés intermétalliques néfastes. En fait, les oxydes ou les nitrures d'aluminium ainsi formés surnagent à la surface du bain, en empêchant ainsi la mise en solution de l'aluminium dans le bain de soudure.

Il en résulte une suppression ou au moins une diminution notable de l'incorporation d'aluminium dans la soudure, donc une amélioration de la résistance en traction du fait d'une disparition totale ou quasi-totale de la phase blanchâtre de ferrite Delta habituellement observée.

Selon le cas, le procédé de l'invention peut comprendre l'une ou plusieurs des caractéristiques suivantes :
- le gaz de protection contient de 1 à 15% en volume dudit au moins un composé additionnel.
- le gaz de protection contient au moins 2 en volume dudit au moins un composé additionnel.
- le gaz de protection contient au plus 10% en volume dudit au moins un composé additionnel.
- le gaz de protection contient uniquement de l'azote en tant que composé additionnel.
- le gaz de protection contient au moins 4% en volume d'azote en tant que composé additionnel.
- le gaz de protection contient au moins 5% en volume d'azote en tant que composé additionnel.
- le gaz de protection contient au plus 8% en volume d'azote en tant que composé additionnel.
- le gaz de protection contient au plus 7% en volume d'azote en tant que composé additionnel.
- le gaz de protection contient au moins 5,5% en volume d'azote et au plus 6,5% en volume d'azote.
- le gaz de protection est un mélange He/Ar/N₂ ou Ar/N₂.
- la ou les pièces d'acier comprennent un revêtement surfacique à base d'aluminium ayant une épaisseur comprise entre 5 et 100 µm, de préférence inférieure ou égale à 50 µm. Le revêtement recouvre au moins une surface de la ou des pièces mais de préférence pas ou quasiment pas de revêtement à base d'aluminium n'est présent sur les rebords d'extrémités de la ou desdites pièces, c'est-à-dire sur les tranches d'une tôle par exemple.
- la ou les pièces métalliques sont en acier avec un revêtement surfacique à base d'aluminium et de silicium, de préférence le revêtement surfacique contient plus de 70% en masse d'aluminium.
- la ou les pièces métalliques sont en acier avec un revêtement surfacique constitué essentiellement d'aluminium et de silicium (Al/Si).
- la ou les pièces métalliques comprennent un revêtement surfacique à base d'aluminium et de silicium contenant une proportion d'aluminium entre 5 et 100 fois supérieure à celle de silicium, par exemple une proportion d'aluminium de 90% en poids et une proportion de silicium de 10% en poids, soit une couche de revêtement surfacique comprenant 9 fois plus d'aluminium que de silicium.
- la ou les pièces métalliques comprennent un revêtement surfacique à base d'aluminium et de silicium contenant une proportion d'aluminium entre 5 et 50 fois supérieure à celle de silicium, notamment une proportion d'aluminium entre 5 et 30 fois supérieure à celle de silicium, en particulier une proportion d'aluminium entre 5 et 20 fois supérieure à celle de silicium.
- l'on soude plusieurs pièces l'une avec l'autre, typiquement deux pièces ; lesdites pièces pouvant être identiques ou différentes, notamment en termes de formes, d'épaisseurs etc...
- les pièces sont en acier fortement allié (>5% en poids d'éléments d'alliage), faiblement allié (<5% en poids d'éléments d'alliage) ou non alliés, par exemple un acier au carbone.
- le fil de soudage est un fil plein ou un fil fourré.
- le fil de soudage a un diamètre entre 0,5 et 5 mm, typiquement entre environ 0,8 et 2,5 mm.
- le fil fusible étant fondu par l'arc électrique, de préférence un arc obtenu au moyen d'une torche de soudage MIG.
- le fil fusible contient du carbone et/ou du manganèse (Min 0.1% C et Min 2% Mn)
- la ou les pièces à souder sont choisies parmi les flancs raboutés et les tubes.
- la ou les pièces à souder sont des éléments de pot d'échappement.
- les pièces sont positionnées et soudées bout à bout jointifs.
- l'arc électrique est généré par une torche de soudage de type MIG (Metal Inert Gas).
- le faisceau laser est généré par un générateur ou un dispositif laser de type CO₂, YAG, à fibre, notamment à fibres d'ytterbium ou d'erbium, ou à disque.
- le faisceau laser précède l'arc MIG durant le soudage, en considérant le sens du soudage.
- le régime de soudage MIG est de type arc court.
- la tension de soudage est inférieure à 20 V, typiquement comprise entre 11 et 16 V.
- l'intensité de soudage est inférieure à 200 A, typiquement comprise entre 118 et 166 A.
- la vitesse de soudage est inférieure à 20 m/min, typiquement comprise entre 4 et 6 m/min
- la ou les pièces à souder ont une épaisseur comprise entre 0.8 et 2.5 mm, de préférence entre 1.8 et 2.3 mm. On considère l'épaisseur au niveau du plan de joint à réaliser, c'est-à-dire à l'endroit où le métal est fondu pour former le joint de soudage, par exemple au niveau du bord d'extrémité de la ou des pièces à souder.
- le joint de soudage a une structure de type martensitique.
- la pression du gaz est comprise entre 2 et 15 bar, par exemple de l'ordre de 4 bar.
- le débit du gaz est compris entre 10 et 40 l/min, typiquement de l'ordre de 25 l/min.
- le point de focalisation du faisceau laser est focalisé au dessus de la pièce à souder, et dans une plage comprise entre 3 à 6 mm.
- la distance entre le fil d'apport et le faisceau laser doit être comprise entre 2 et 3 mm.
- l'on soude plusieurs pièces l'une avec l'autre, typiquement deux pièces.
- le mélange gazeux utilisé dans le cadre de la présente invention peut être réalisé soit directement sur site par mélange des constituants du mélange dans des proportions désirées au moyen d'un mélangeur de gaz, soit être sous forme pré-conditionnée, c'est-à-dire réalisé en usine de conditionnement puis ensuite acheminé sur son lieu d'utilisation dans des récipients de gaz adéquats, telles des bouteilles de gaz de soudage.

L'invention va maintenant être mieux comprise grâce à la description suivante et des exemples réalisés pour montrer l'efficacité du procédé de soudage hybride arc/laser de l'invention.

### Exemples

Le procédé de soudage hybride laser/arc selon l'invention a donné de bons résultats lors de sa mise en oeuvre pour opérer un soudage hybride au moyen d'une source laser de type CO₂ et d'une torche de soudage à l'arc MIG de pièces en acier revêtu d'une couche d'environ 30 µm d'un alliage aluminium/silicium en proportions respectives de 90% et de 10% en poids.

Les pièces soudées ont une épaisseur de 2.3 mm.

Dans le cadre des essais réalisés, le gaz employé qui est distribué à un débit de 25l/min et à une pression de 4 bar, est :
- Essai A (comparatif) : mélange ARCAL 37 formé de 70% d'hélium et 30% d'argon,
- Essai B : Mélange ARCAL 37 additionné de 6% de N₂.
- Essai C : Mélange ARCAL 37 additionné de 3% de O₂.

Le mélange ARCAL 37 est commercialisé par L'Air Liquide.

La torche utilisée est une torche MIG de référence OTC alimentée par un fil d'apport de type Nic 535 (0.7% C et 2% Mn) de 1.2 mm de diamètre, qui est délivré à une cadence de 3 m/min.

La tension de soudage de 15 V environ et l'intensité d'environ 139 A qui sont obtenues grâce à un générateur de type Digi@wave 500 (Arc court/Arc court +) en mode synergique (EN 131) commercialisé par Air Liquide Welding France.

La source laser est un oscillateur laser de type CO₂ de puissance de 12 kW

La vitesse de soudage atteinte est de 4 m/min.

Les pièces à souder sont des flancs raboutés disposés bout à bout jointif en acier aluminisé (Al/Si) de type Usibor 1500^{™}.

Les résultats obtenus montrent que la présence de N₂ dans un mélange argon/hélium conduit à de bien meilleurs résultats que les essais sans azote dans le gaz de protection.

De même, la présence d'une faible proportion d'O2 dans un mélange argon/hélium permet de contrer l'effet de suppression de transformation austénitique causé par la présence d'aluminium en zone fondue.

En effet, en utilisant les mélanges Ar et/ou He et N₂ et/ou O₂ selon l'invention, on assiste donc à une amélioration notable des résultats, qui augmente proportionnellement à la teneur en N₂ ou O₂ dans le mélange. En effet les micrographies montrent que, dans un cas comme dans l'autre, les phases blanches ont entièrement disparues, alors que ça n'est pas le cas avec le mélange ARCAL 37 seul.

En outre, avec les additions de O₂ ou N₂, la résistance à la rupture de l'assemblage, après austénitisation et trempe, est équivalente à celle du métal de base.

Les résultats obtenus lors des essais montrent qu'une addition d'azote dans l'argon et/ou l'hélium permet d'améliorer fortement la qualité du soudage des aciers revêtus d'une couche surfacique d'alliage aluminium/silicium, en particulier une microstructure homogène de type martensite en zone fondue.

L'amélioration est d'autant plus notable que la teneur en azote augmente mais avec un optimum inférieur à 10% en volume, ce qui inciterait à utiliser de l'ordre de 6 à 7% d'azote dans l'argon ou dans l'argon/hélium.

L'amélioration est également d'autant plus notable que la teneur en oxygène augmente mais avec un optimum inférieur à 10% en volume, ce qui inciterait à utiliser de l'ordre de 3 à 5% d'azote dans l'argon ou dans l'argon/hélium.

Le procédé de l'invention est particulièrement adapté au soudage de flancs raboutés (*tailored blanks*) utilisés dans le domaine de la construction automobile, d'éléments de pots d'échappements notamment de véhicules, ou au soudage de tubes.

## Revendications

1. Procédé de soudage hybride laser/arc mettant en oeuvre un arc électrique et un faisceau laser se combinant l'un à l'autre, un bain de soudage étant réalisé sur au moins une pièce d'acier comprenant un revêtement surfacique à base d'aluminium, dans lequel du métal fondu est apporté par fusion d'un fil fusible, et dans lequel on met par ailleurs en oeuvre un gaz de protection, **caractérisé en ce que** le gaz de protection est constitué d'au moins composé principal choisi parmi l'argon et d'hélium, et de 1 à 20% en volume d'au moins un composé additionnel choisi parmi l'azote et l'oxygène.

2. Procédé selon la revendication précédente, **caractérisé en ce que** le gaz de protection contient de 2 à 10% en volume dudit au moins un composé additionnel.

3. Procédé selon l'une des revendications précédentes, **caractérisé en ce que** le gaz de protection contient uniquement de l'azote en tant que composé additionnel.

4. Procédé selon l'une des revendications précédentes, **caractérisé en ce que** le gaz de protection contient de 4 à 7% en volume d'azote en tant que composé additionnel.

5. Procédé selon l'une des revendications précédentes, **caractérisé en ce que** le gaz de protection est un mélange He/Ar/N₂ ou Ar/N₂.

6. Procédé selon l'une des revendications précédentes, **caractérisé en ce que** la ou les pièces d'acier comprennent un revêtement surfacique à base d'aluminium ayant une épaisseur comprise entre 5 et 100 µm.

7. Procédé selon la revendication 6, **caractérisé en ce que** l'épaisseur du revêtement est inférieure ou égale à 50 µm.

8. Procédé selon l'une des revendications précédentes, **caractérisé en ce que** la ou les pièces métalliques sont en acier avec un revêtement surfacique à base d'aluminium et de silicium, de préférence le revêtement surfacique contient plus de 70% en masse d'aluminium.

9. Procédé selon l'une des revendications précédentes, caractérisé en que le fil fusible étant fondu par l'arc électrique, de préférence un arc obtenu au moyen d'une torche de soudage MIG.

10. Procédé selon l'une des revendications précédentes, **caractérisé en ce que** le fil fusible contient du carbone et/ou du manganèse (Min 0.1% C et Min 2% Mn)

11. Procédé selon l'une des revendications précédentes, **caractérisé en ce que** la ou les pièces à souder sont choisies parmi les flancs raboutés, les tubes ou des éléments de pot d'échappement.

12. Procédé selon l'une des revendications précédentes, **caractérisé en ce que** les pièces sont positionnées et soudées bout à bout jointifs.

## Patentansprüche

1. Verfahren zum Laserstrahl-Lichtbogen-Hybridschweißen unter Verwendung eines Lichtbogens und eines Laserstrahls, die miteinander kombiniert werden, wobei ein Schweißbad auf wenigstens einem Teil aus Stahl realisiert wird, das eine Oberflächenbeschichtung auf Aluminiumbasis aufweist, bei dem geschmolzenes Metall durch Abschmelzen eines abschmelzbaren Drahtes zugeführt wird und bei dem des Weiteren ein Schutzgas verwendet wird, **dadurch gekennzeichnet, dass** das Schutzgas aus wenigstens einer Hauptverbindung, die aus Argon und Helium ausgewählt ist und 1 bis 20 Volumen-% wenigstens einer zusätzlichen Verbindung, die aus Stickstoff und Sauerstoff ausgewählt ist, besteht.

2. Verfahren nach dem vorhergehenden Anspruch, **dadurch gekennzeichnet, dass** das Schutzgas 2 bis 10 Volumen-% der wenigstens einen zusätzlichen Verbindung enthält.

3. Verfahren nach einem der vorhergehenden Ansprüche, **dadurch gekennzeichnet, dass** das Schutzgas nur Stickstoff als zusätzliche Verbindung enthält.

4. Verfahren nach einem der vorhergehenden Ansprüche, **dadurch gekennzeichnet, dass** das Schutzgas 4 bis 7 Volumen-% Stickstoff als zusätzliche Verbindung enthält.

5. Verfahren nach einem der vorhergehenden Ansprüche, **dadurch gekennzeichnet, dass** das Schutzgas ein He/Ar/N₂- oder Ar/N₂-Gemisch ist.

6. Verfahren nach einem der vorhergehenden Ansprüche, **dadurch gekennzeichnet, dass** das oder die Teile aus Stahl eine Oberflächenbeschichtung auf Aluminiumbasis mit einer Dicke zwischen 5 und 100 µm aufweisen.

7. Verfahren nach Anspruch 6, **dadurch gekennzeichnet, dass** die Dicke der Beschichtung kleiner oder gleich 50 µm ist.

8. Verfahren nach einem der vorhergehenden Ansprüche, **dadurch gekennzeichnet, dass** das oder die Metallteile aus Stahl mit einer Oberflächenbeschichtung auf Aluminium- und Siliziumbasis sind, wobei die Oberflächenbeschichtung vorzugsweise mehr als 70 Masse-% Aluminium enthält.

9. Verfahren nach einem der vorhergehenden Ansprüche, **dadurch gekennzeichnet, dass** der abschmelzbare Draht durch den Lichtbogen abgeschmolzen wird, vorzugsweise durch einen Lichtbogen, der mittels eines MIG-Schweißbrenners erhalten wird.

10. Verfahren nach einem der vorhergehenden Ansprüche, **dadurch gekennzeichnet, dass** der abschmelzbare Draht Kohlenstoff und/oder Mangan (mind. 0,1 % C und mind. 2 % Mn) enthält.

11. Verfahren nach einem der vorhergehenden Ansprüche, **dadurch gekennzeichnet, dass** das oder die zu schweißenden Teile aus gestumpften Flanken, Rohren oder Auspufftopfelementen ausgewählt sind.

12. Verfahren nach einem der vorhergehenden Ansprüche, **dadurch gekennzeichnet, dass** die Teile Stoß an Stoß positioniert und zusammengeschweißt werden.

## Claims

1. Laser/arc hybrid welding method using an electric arc and a laser beam that are combined with one another, a weld pool being produced on at least one steel part comprising an aluminium-based surface coating, in which weld metal is provided by means of melting a consumable wire, and in which, in addition, a shielding gas is used, **characterised in that** the shielding gas consists of at least one main compound selected from argon and helium, and of from 1 to 20 vol.% of at least one additional compound selected from nitrogen and oxygen.

2. Method according to the preceding claim, **characterised in that** the shielding gas contains from 2 to 10 vol.% of said at least one additional compound.

3. Method according to either of the preceding claims, **characterised in that** the shielding gas contains only nitrogen as the additional compound.

4. Method according to any of the preceding claims, **characterised in that** the shielding gas contains from 4 to 7 vol.% of nitrogen as the additional compound.

5. Method according to any of the preceding claims, **characterised in that** the shielding gas is an He/Ar/N₂ or Ar/N₂ mixture.

6. Method according to any of the preceding claims, **characterised in that** the steel part or parts comprise(s) an aluminium-based surface coating having a thickness of between 5 and 100 µm.

7. Method according to claim 6, **characterised in that** the thickness of the coating is less than or equal to 50 µm.

8. Method according to any of the preceding claims, **characterised in that** the metal part or parts is/are made of steel having an aluminium- and silicon-based surface coating, the surface coating preferably containing more than 70 wt.% aluminium.

9. Method according to any of the preceding claims, **characterised in that** the consumable wire is melted by the electric arc, preferably an arc obtained using a MIG welding torch.

10. Method according to any of the preceding claims, **characterised in that** the consumable wire contains carbon and/or manganese (min 0.1 % C and min 2 % Mn).

11. Method according to any of the preceding claims, **characterised in that** the part or parts to be welded are selected from tailored blanks, pipes or components of mufflers.

12. Method according to any of the preceding claims, **characterised in that** the parts are positioned and welded in a square butt configuration.
